# FASCICULE DE BREVET EUROPEEN

(11) **EP 2 032 437 B1**
(45) Date de publication et mention de la délivrance du brevet: **31.03.2010**
(21) Numéro de dépôt: 07803938.5
(22) Date de dépôt: 26.06.2007
(51) Int. Cl.: B64G 1/00, B64G 1/24, B64G 1/64, B64G 1/40

(54) **PROCEDE DE MISE EN ORBITE OPERATIONNELLE D'UN SATELLITE ARTIFICIEL ET DISPOSITIF DE PROPULSION ASSOCIE**
VERFAHREN ZUR PLATZIERUNG EINES KÜNSTLICHEN SATELLITEN IM OPERATIONELLEN ORBIT UND ENTSPRECHENDE ANTRIEBSVORRICHTUNG
METHOD FOR PLACING IN OPERATIONAL ORBIT AN ARTIFICIAL SATELLITE AND ASSOCIATED PROPULSION DEVICE

(30) Priorité: 27.06.2006 FR 0605794
(43) Date de publication de la demande: 11.03.2009
(73) Titulaire: ASTRIUM SAS, 75016 Paris (FR)
(72) Inventeur: GENESTE, Jean-François, 31500 Toulouse (FR); POUSSIN, Jean-François, 31520 Ramonville (FR)
(74) Mandataire: Cabinet Plasseraud
(86) Numéro de dépôt international: PCT/FR2007/051516
(87) Numéro de publication internationale: WO 2008/001002

(56) Documents cités:
- EP-A- 0 947 424
- WO-A-99/14118
- WO-A-2005/118394
- DE-C1- 19 623 017
- US-A1- 4 471 926
- US-A1- 6 113 032
- US-A1- 2002 179 776

## Description

La présente invention concerne un procédé de mise en orbite opérationnelle, et en particulier en orbite géostationnaire, d'un satellite artificiel équipé d'un système propre de propulsion, et l'invention concerne également un dispositif de propulsion, associé au satellite, pour la mise en orbite opérationnelle de ce satellite à partir d'une orbite de transfert obtenue au moyen d'un lanceur spatial.

Le procédé le plus courant de mise d'un satellite en orbite géostationnaire comprend une première étape, qui est une étape d'injection sur une orbite de transfert par un lanceur spatial, suivi, après séparation entre le lanceur et le satellite, d'une deuxième étape, au cours de laquelle le satellite fournit le reste de la propulsion nécessaire, grâce à son système propre de propulsion, pour finir d'arriver en orbite géostationnaire.

Généralement, environ les deux tiers des ergols embarqués par le satellite pour son système propre de propulsion sont consommés lors de cette deuxième étape, qui est la phase de mise en orbite, et seulement le tiers restant des ergols sert au maintien à poste et à la mission réelle du satellite en orbite géostationnaire.

Ce procédé de mise en orbite s'est développé, en particulier dans le monde occidental, car ce procédé offre, jusqu'à présent, le meilleur compromis technico-économique, tant pour les lanceurs que pour les satellites, et en particulier procure le meilleur rendement énergétique pour les lanceurs.

Dans le cadre du marché commercial des lancements de satellites, la facturation des lancements a essentiellement pris en compte les masses à satelliser, aussi longtemps que des lanceurs initialement développés à des fins militaires n'ont pas été rendus disponibles pour le marché commercial. L'arrivée sur le marché commercial de tels lanceurs à bas coût de revient a remis en cause ce principe de facturation, en proposant des prix de lancement presque indépendant des masses à satelliser, et en fournissant la possibilité d'amener les satellites presque directement en orbite géostationnaire, du fait que ces nouveaux lanceurs ont des étages réallumables. Dans ce cas, le dernier étage, ou étage supérieur, du lanceur peut placer le (ou les) satellite(s) directement sur une orbite proche de l'orbite géostationnaire, puis, après séparation entre satellite(s) et cet étage du lanceur, ce dernier, si l'on veut respecter les recommandations internationales sur les débris spatiaux, doit rejoindre une orbite dite "cimetière", par exemple à environ 300 kilomètres au-dessus de l'orbite géostationnaire, et être passivé pour ne pas créer de débris spatiaux. De son ou leur côté, le ou les satellites rejoint ou rejoignent l'orbite géostationnaire à l'aide de son ou leur système propre de propulsion.

Ce procédé d'injection directe en orbite géostationnaire pose cependant de nombreux problèmes.

Dans le cas de lancement double ou multiple, il est exclu de larguer la structure porteuse des satellites sur l'orbite géostationnaire, de sorte que cette structure porteuse devra être maintenue solidaire de l'étage supérieur du lanceur pour l'évacuer ensuite en même temps que ce dernier vers l'orbite cimetière. De plus, après la séparation, sur une orbite proche de l'orbite géostationnaire, entre le ou les satellites et l'étage supérieur du lanceur, le ou les propulseurs de ce dernier doivent être rallumés, au moins une fois, pour que cet étage du lanceur rejoigne l'orbite cimetière. En outre, en cas de problème majeur rencontré sur l'orbite proche de l'orbite géostationnaire par cet étage du lanceur, ce dernier peut rester bloqué sur cette orbite, voire exploser et créer ainsi des débris dangereux pour les satellites géostationnaires.

Afin d'éviter ces inconvénients, il a été proposé par WO 99/14118 un procédé de mise sur orbite géostationnaire d'un satellite artificiel injecté sur cette orbite par un lanceur spatial, et tel que :
- l'ensemble constitué par le dernier étage du lanceur et le satellite à injecter sur l'orbite géostationnaire est tout d'abord envoyé directement sur une orbite circulaire, dite cimetière, proche de l'orbite géostationnaire, mais suffisamment éloignée de cette dernière pour éviter d'éventuelles interférences avec des objets spatiaux se trouvant sur l'orbite géostationnaire,
- le satellite est séparé du dernier étage du lanceur, lequel demeure sur l'orbite cimetière, et
- le satellite rejoint l'orbite géostationnaire à partir de l'orbite cimetière à l'aide de son système propre de propulsion.

Ainsi, le lanceur envoie le satellite sur l'orbite cimetière, sur laquelle l'étage supérieur du lanceur largue le satellite, qui rejoint ensuite par ses propres moyens l'orbite géostationnaire. L'étage supérieur du lanceur étant directement sur l'orbite cimetière, il n'est plus nécessaire de rallumer son ou ses propulseurs, et il suffit de le passiver sur cette orbite cimetière, laquelle est, de préférence, à une altitude éloignée de quelques dizaines à quelques centaines de kilomètres de l'orbite géostationnaire, et notamment à environ 300 kilomètres de l'orbite géostationnaire.

Toutefois, ce procédé a néanmoins pour inconvénient qu'il nécessite l'utilisation d'un lanceur plus puissant que ceux permettant une mise en orbite géostationnaire par le procédé le plus classique comprenant une première étape d'injection du satellite sur une orbite de transfert suivie d'une deuxième étape au cours de laquelle le satellite rejoint l'orbite géostationnaire au moyen de son propre système de propulsion.

Or, pour des raisons de sécurité d'approvisionnement en lanceurs, le marché commercial impose aux fabricants de satellites une compatibilité avec les principaux lanceurs disponibles sur le marché, parmi lesquels tous ne sont pas aujourd'hui capables d'une mise en orbite géostationnaire directe.

La contrainte commerciale de la compatibilité des satellites à de tels lanceurs conduit donc à développer un autre procédé permettant de mettre un satellite en orbite géostationnaire à partir d'une orbite de transfert, sans pour autant perdre les avantages que confère une mise en orbite géostationnaire directe par le lanceur, et dont l'un des plus importants est que le carburant économisé sur le satellite par une mise en orbite géostationnaire directe amène à libérer du volume dans le satellite, de sorte à pouvoir augmenter la charge utile embarquée, et réduire ainsi les coûts de service dans une mesure très significative, garantissant une meilleure compétitivité. Cette contrainte commerciale de compatibilité des satellites avec plusieurs types de lanceurs s'applique également à des orbites autres que géostationnaires par exemple des orbites circulaires d'altitude moyenne, dites MEO, telles que celles utilisées par les satellites des constellations de navigation (GPS ou Galileo).

A cet effet, l'invention propose un procédé de mise en orbite opérationnelle d'un satellite, équipé d'un système propre de propulsion, à partir d'une orbite de transfert obtenue au moyen d'un lanceur spatial, comprenant au moins les étapes suivantes:
a) un dispositif de propulsion commandé par le satellite est attaché de manière séparable au satellite, et l'ensemble constitué du satellite et du dispositif de propulsion est monté sur le lanceur avant l'injection par le lanceur de l'ensemble sur l'orbite de transfert,
b) ledit ensemble est amené, au moyen du dispositif de propulsion, depuis l'orbite de transfert sur une orbite intermédiaire entre l'orbite de transfert et l'orbite opérationnelle, l'orbite intermédiaire étant voisine de l'orbite opérationnelle mais suffisamment éloignée de cette dernière pour éviter d'éventuelles interférences avec l'orbite opérationnelle,
c) le satellite est séparé du dispositif de propulsion, qui reste sur l'orbite intermédiaire, et
d) le satellite rejoint, au moyen de son système propre de propulsion, l'orbite opérationnelle à partir de l'orbite intermédiaire.

On comprend que le lanceur spatial permet d'injecter, de manière bien connue, l'ensemble constitué du satellite et du dispositif de propulsion sur une orbite de transfert, sur laquelle intervient la séparation entre le dernier étage ou étage supérieur du lanceur et l'ensemble du satellite et du dispositif de propulsion, et à partir de laquelle cet ensemble est amené, en utilisant principalement les ergols du dispositif de propulsion, sur l'orbite intermédiaire, voisine mais suffisamment éloignée de l'orbite opérationnelle, et sur laquelle reste le dispositif de propulsion, après sa séparation du satellite, satellite qui rejoint ensuite, au moyen de son système propre de propulsion, l'orbite opérationnelle à partir de l'orbite intermédiaire.

Ce procédé a pour avantage que le système propre de propulsion du satellite n'a besoin de consommer qu'une faible quantité d'ergols pour passer de l'orbite intermédiaire à l'orbite opérationnelle, et qu'il est inutile de rallumer le ou les propulseurs du dispositif de propulsion, d'une part, et, d'autre part, du dernier étage du lanceur pour les conduire respectivement sur une orbite cimetière, puisque le dispositif de propulsion et le dernier étage du lanceur peuvent rester respectivement sur l'orbite intermédiaire et sur l'orbite de transfert.

Avantageusement, le procédé présente de plus l'une et/ou l'autre des caractéristiques ci-dessous :
- le passage de l'orbite intermédiaire à l'orbite opérationnelle est réalisé au moyen d'une ou plusieurs impulsions successives, délivrées par le système propre de propulsion du satellite ;
- une étape de passivation du dispositif de propulsion en orbite intermédiaire, avant ou après sa séparation du satellite afin d'éviter la création de débris spatiaux par explosion;
- l'orbite opérationnelle est une orbite géostationnaire, et l'orbite intermédiaire est une orbite dite cimetière, à une altitude éloignée de quelques dizaines à quelques centaines de kilomètres de l'orbite géostationnaire.
- l'orbite opérationnelle est une orbite dite MEO, autour de 20 000 km d'altitude, et l'orbite intermédiaire est une orbite dite cimetière, à une altitude éloignée de quelques dizaines à quelques centaines de kilomètres de l'orbite MEO.

Sur de nombreux lanceurs du marché, l'interface entre le lanceur (son étage supérieur ou dernier étage) et le satellite se fait au moyen d'un adaptateur, en général de forme globalement tronconique, dont les grande et petite bases sont attachées de manière séparables respectivement au lanceur et au satellite. Cette configuration est applicable à la plupart des lanceurs, à tel point que les dimensions de l'adaptateur tronconique d'interface lanceur-satellite sont standard. Dans la plupart des cas également, l'intérieur de l'adaptateur est vide.

Toutefois, il a déjà été proposé dans les brevets européens EP 1 313 643 B1 et EP 1 492 706 B1, d'équiper un adaptateur globalement tronconique de composants divers. Selon EP 1 313 643 B1, l'adaptateur comporte au moins deux parties d'adaptateur reliées l'une à l'autre de manière détachable, une première partie étant fixée de manière permanente au lanceur, et la deuxième partie étant reliée de manière détachable au satellite et comportant de plus des moyens de montage internes pour des équipements, comprenant des équipements pour au moins un satellite autonome ou indépendant, tels que des panneaux solaires, des systèmes de propulsion, des systèmes de commande et des ordinateurs embarqués, voire même une charge embarquée et/ou des satellites autonomes.

Lors de la séparation d'avec le lanceur, le satellite fixé sur l'adaptateur est détaché de la petite base de ce dernier, donc de la deuxième partie d'adaptateur, après quoi les deux parties de l'adaptateur se détachent l'une de l'autre, et la seconde partie de l'adaptateur se sépare de la première restant liée au lanceur, la seconde partie d'adaptateur devenant un véhicule spatial autonome,avec un système de propulsion propre, pouvant mettre en orbite au moins un satellite additionnel ou constituant par lui-même un tel satellite additionnel.

Selon EP 1 492 706 B1, l'adaptateur globalement tronconique comprend également deux parties. Mais ces deux parties sont conçues pour être couplées séparément et de manière détachable une première avec le lanceur et la seconde avec le satellite, avant d'être connectées l'une à l'autre de manière permanente, en configuration de service, des moyens de propulsion et/ou une charge utile étant montées dans au moins la première partie d'adaptateur. De la sorte, l'adaptateur est séparable du lanceur comme du satellite et est équipé pour réaliser un vol spatial indépendant. L'adaptateur est donc utilisable comme un véhicule spatial indépendant, notamment déployable en tant que véhicule de remorquage dans l'espace.

Pour les missions normales, dans lesquelles le lanceur atteint l'orbite correcte, le satellite peut d'abord être détaché de l'adaptateur par un mécanisme de séparation prévu à cet effet dans l'accouplement entre le satellite et l'adaptateur. Ensuite, par un mécanisme de séparation dans l'accouplement entre l'adaptateur et le lanceur, l'adaptateur en tant que vaisseau spatial indépendant peut être détaché du lanceur, et poursuivre son vole indépendamment du lanceur.

Dans certaines conditions, en utilisation, l'adaptateur peut être d'abord séparé du lanceur alors que l'accouplement au satellite reste intact, ce qui est important si l'orbite désirée n'est pas atteinte, par exemple en raison d'un fonctionnement impropre du lanceur. L'adaptateur reste alors initialement accouplé au satellite, et les moyens de propulsion de l'adaptateur peuvent être utilisés pour réaliser une manoeuvre de secours ou de correction d'orbite, de sorte que l'orbite désirée pour le satellite peut néanmoins être atteinte. Alors, le mécanisme de séparation dans l'accouplement entre l'adaptateur et le satellite peut être activé, afin de séparer le satellite de l'adaptateur, qui peut ensuite accomplir une mission propre, tandis que le satellite continue sa trajectoire sur l'orbite qui a entre temps été atteinte. En cas de besoin, l'adaptateur déjà séparé du satellite peut être réaccouplé à ce dernier, afin d'exécuter une correction d'orbite du satellite. En plus de son propre système de propulsion, l'adaptateur est aussi équipé de moyens de production d'énergie ( tels que panneaux solaires déployables avec d'éventuels moyens d'orientation des panneaux vers le soleil) et de moyens de commande (ordinateurs notamment),et éventuellement d'éléments structuraux externes tels que radiateurs déployables, pour évacuer la chaleur en excès générée par exemple par une charge utile embarquée dans l'adaptateur.

En conséquence, dans les réalisations selon les deux brevets européens précités, l'adaptateur est équipé et agencé en véhicule spatial autonome et indépendant, d'une structure pouvant être sensiblement aussi complexe et coûteuse que celle du satellite.

Le brevet US 4 471 926 décrit un dispositif de propulsion pour la mise en orbite d'un satellite.

Pour la mise en oeuvre du procédé de mise en orbite opérationnelle selon l'invention et tel que défini ci-dessus, l'invention a également pour objet un dispositif de propulsion aménagé à partir d'un adaptateur d'interface lanceur-satellite, et permettant d'atteindre l'orbite intermédiaire depuis le point d'injection en orbite de transfert, pour une masse et un coût raisonnable.

A cet effet, le dispositif de propulsion selon l'invention, pour la mise en oeuvre du procédé de mise en orbite opérationnelle défini ci-dessus, est commandé par le satellite et comprend un adaptateur d'interface lanceur-satellite, auquel sont associées :
- au moins deux réservoirs, dont au moins un contient un ergol carburant et au moins un autre un ergol comburant,
- au moins un réservoir de pressurisation d'au moins un ergol,
- au moins un propulseur d'apogée,
- des tubulures d'alimentation dudit propulseur d'apogée en ergols des réservoirs, et, de préférence,
- des moyens de protection thermiques et composants de contrôle thermique.

Ce dispositif de propulsion est donc agencé en étage de propulsion auxiliaire largable du satellite, et n'est donc ni un étage de propulsion autonome, contrairement aux enseignements des deux brevets européens précités, ni un étage du lanceur, car il n'est pas sous l'autorité du lanceur et est directement commandé par le satellite.

Pour réaliser les réservoirs d'ergol, des géométries sphériques, cylindro-sphériques ou sphéro-coniques peuvent convenir. Cependant, en raison de considérations d'optimisation d'encombrement, il se caractérise, selon l'invention, en ce qu'au moins deux des réservoirs d'ergol sont des réservoirs toriques, dont l'un au moins est intérieur et au moins un autre est extérieur à l'adaptateur. Pour des raisons physiques, il peut être utile que les réservoirs toriques soient inclinés l'un par rapport à l'autre et chacun d'eux par rapport à un plan perpendiculaire à l'axe de l'adaptateur.

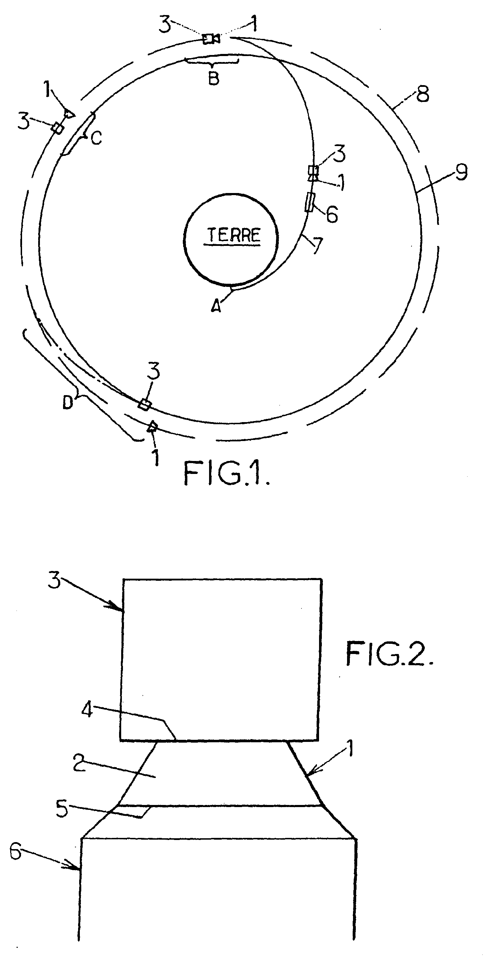

Dans ce cas, pour des raisons d'équilibre, les deux réservoirs toriques sont avantageusement inclinés l'un par rapport à l'autre en opposition de phase, c'est-à-dire tels que le point le plus haut de l'un corresponde au point le plus bas de l'autre, et inversement. Pour des raisons physico-chimiques, parce que les points de fusion des deux ergols sont en général différents l'un de l'autre, il est préférable que ledit au moins un réservoir torique intérieur à l'adaptateur est destiné à contenir celui des ergols carburant et comburant ayant le point de fusion le plus élevé, afin que cet ergol soit mieux protégé thermiquement du vide sidéral. Cette mesure permet d'économiser de l'énergie en économisant sur le fonctionnement d'un système de réchauffage équipant ce réservoir d'ergol. Par ailleurs, la géométrie torique des réservoirs d'ergol se prête bien à la mise en place, à l'intérieur d'un adaptateur d'interface de forme tronconique standard (dont les grande et petite bases sont destinées à être attachées de manière séparable respectivement au lanceur et au satellite), d'un réservoir supplémentaire,de préférence sphérique, qui est le réservoir de pressurisation contenant de l'hélium pour assurer la pressurisation des réservoirs d'ergol à une pression suffisante à l'expulsion des ergols dans les circuits de tubulures reliant ces réservoirs au propulseur d'apogée, et permettant le mélange carburant-comburant en entrée de ce propulseur, dont l'installation dans l'adaptateur est également facilitée par la géométrie torique des réservoirs d'ergol.
- D'autres caractéristiques et avantages de l'invention ressortiront de la description donnée ci-dessous à titre non limitatif, d'exemples de réalisation décrits en référence aux dessins annexés sur lesquels :la figure 1 est un schéma de la trajectoire suivie par le satellite pour parvenir sur son orbite opérationnelle,
- la figure 2 est une vue schématique partielle en élévation latérale d'un satellite monté sur le dernier étage d'un lanceur (fusée) par l'intermédiaire d'un adaptateur d'interface tronconique agencé en dispositif de propulsion esclave du satellite ;
- la figure 3 est un schéma d'un système de propulsion embarqué dans l'adaptateur de la figure 2 ;
- la figure 4 est une vue en coupe axiale schématique d'un agencement avantageux de deux réservoirs d'ergol torique sur l'adaptateur tronconique de la figure 2, et
- la figure 5 est une vue schématique en coupe axiale représentant les deux réservoirs toriques de la figure 4 dans une disposition d'inclinaison relative avantageuse.

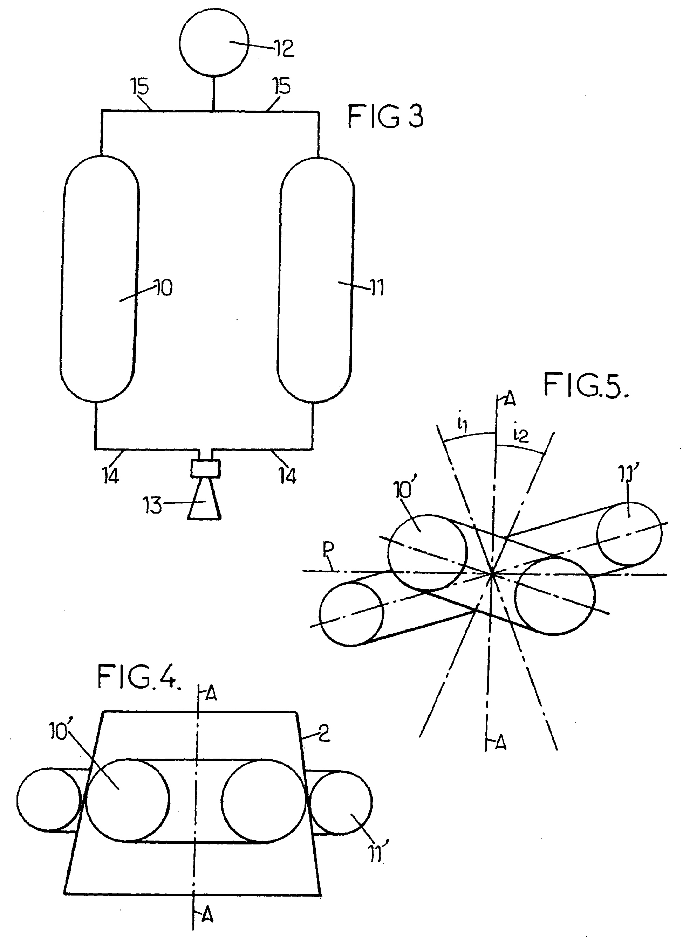

Après la réalisation d'un dispositif de propulsion 1, agencé en étage de propulsion auxiliaire largable du satellite 3 et commandé par ce dernier, par l'aménagement d'un adaptateur 2 tronconique d'interface, comme décrit ci-après en référence aux figures 3 à 5, le satellite 3, équipé d'un système propre de propulsion,est fixé de manière séparable, par un mécanisme d'accouplement libérable, sur la petite base 4 (en position supérieure) de l'adaptateur 2, lui-même fixé de manière séparable, par sa grande base 5, à l'aide d'un autre mécanisme d'accouplement libérable, sur l'extrémité supérieure du dernier étage (ou étage supérieur) d'un lanceur spatial 6.

A la fin de la 1^{ère} phase propulsée assurée par le lanceur 6, au point A sur la figure 1, invervient la séparation, au niveau de la grande base 5 de l'adaptateur 2, entre l'ensemble constitué du satellite 3 et du dispositif de propulsion 1, d'une part, et, d'autre part, l'étage supérieur du lanceur 6, après l'injection par le lanceur 6 de l'ensemble satellite 3- dispositif de propulsion 1 sur une orbite de transfert 7 elliptique. Cette orbite de transfert 7 est parcourue, en phase balistique, jusque dans la zone du point B sur la figure 1, où par une deuxième phase propulsée assurée par le dispositif de propulsion 1, sous le contrôle total des circuits électroniques de commande du satellite 3, est réalisée une circularisation de l'ensemble satellite 3- dispositif de propulsion 1 sur une orbite circulaire intermédiaire 8, tandis que l'étage supérieur du lanceur 6 est mis en orbite cimetière sur cette orbite de transfert 7.

Le passage sur l'orbite circulaire intermédiaire 8 (entre l'orbite de transfert 7 et l'orbite opérationnelle 9) est commandé par les instruments de mesure d'attitude et de contrôle du satellite 3, qui commandent au dispositif de propulsion 1 des impulsions de poussée successives. Normalement, si l'optimisation de l'ensemble satellite 3-dispositif de propulsion 1 est bonne, tous les ergols du dispositif de propulsion 1 seront consommés lorsque l'ensemble satellite 3-dispositif de propulsion 1 est parvenu sur l'orbite intermédiaire 8. Le dispositif de propulsion 1 constitue alors une masse morte pouvant gêner le satellite 3 dans sa vie opérationnelle. Le satellite 3 commande alors la séparation entre lui-même et le dispositif de propulsion 1, qui reste sur l'orbite intermédiaire 8, faisant office pour lui d'orbite cimetière, raison pour laquelle l'orbite intermédiaire 8 est choisie à, par exemple, 300 km au dessus de l'orbite opérationnelle 9, qui est par exemple une orbite géostationnaire.

Avant ou après la séparation entre le satellite 3 et le dispositif de propulsion 1, ce dernier est passivé, essentiellement par vidange de ses fluides, restes d'ergols notamment, pour éviter tout risque d'explosion en orbite et/ou tout risque d'éjection imprévue des restes d'ergols, pouvant rapprocher le dispositif de propulsion 1 de l'orbite opérationnelle 9.

Ensuite, par la mise en oeuvre de son système propre de propulsion, délivrant une ou plusieurs impulsions successives, le satellite 3 se transfère de l'orbite intermédiaire 8 à son orbite circulaire opérationnelle 9. Dans cet exemple, dans lequel l'orbite intermédiaire 8 est voisine et au-dessus de l'orbite géostationnaire 9, mais suffisamment éloignée de cette dernière pour éviter d'éventuelles interférences avec elle et pour pouvoir faire fonction d'orbite cimetière pour le dispositif de propulsion 1, le système propre de propulsion du satellite 3 délivre une ou plusieurs rétro-impulsions successives.

Un avantage de ce procédé de mise en orbite opérationnelle est que le largage du dispositif de propulsion 1 sur l'orbite intermédiaire 8 permet également d'avoir une conception du satellite 3 qui est unique, que la mise en orbite par le lanceur 6 soit quasi directe, comme connu dans l'état de la technique, ou obtenue au moyen du dispositif de propulsion 1.

Le procédé, décrit ci-dessus pour une orbite opérationnelle circulaire qui est géostationnaire 9, est également applicable aux orbites circulaires dites MEO (acronyme de l'expression anglaise « Middle Earth Orbit») entre 20 000 et 25 000 km d'altitude environ, qui sont utilisées pour les constellations satellitaires de navigation (GPS,Glonass, Galiléo) ou aux orbites basses, afin de ne pas polluer des zones protégées avec des débris spatiaux.

Le dispositif de propulsion 1 nécessaire à la mise en oeuvre de ce procédé est réalisé au moyen de l'adaptateur 2 d'interface entre le lanceur 6 et le satellite 3 (voir figure 2). Cet adaptateur 2 intègre un système de propulsion qui permet d'effectuer les manoeuvres propulsives amenant l'ensemble constitué du satellite 3 et du dispositif de propulsion 1 sur l'orbite intermédiaire 8. Ledit système de propulsion est entièrement commandé par le satellite 3 ce qui permet d'éviter de dupliquer dans l'adaptateur 2 les équipements nécessaires à l'exécution des manoeuvres propulsives en réutilisant des équipements déjà présents dans le satellite 3 contrairement à ce qui est nécessaire selon EP 1 313 643 et EP 1 492 706, qui tous deux ont pour objet de rendre l'adaptateur autonome en le munissant d'équipements à cet effet.

L'adaptateur d'interface 2 peut être, mais pas nécessairement, de forme tronconique standard dont les grande 5 et petite 4 bases sont destinées à être attachées de manière séparable respectivement au lanceur 6 et au satellite 3, comme précédemment mentionné.

Le système de propulsion comprend dans l'exemple de la figure 3:
- deux réservoirs, dont l'un 10 contient un ergol carburant et l'autre 11 un ergol comburant,
- un réservoir 12 d'hélium pour la pressurisation des deux ergols, ce réservoir de pressurisation 12 étant de forme sphérique,
- un propulseur d'apogée 13,
- des tubulures 14 d'alimentation du propulseur 13 d'apogée en ergols des réservoirs 10 et 11, et des tubulures 15 de pressurisation reliant le réservoir d'hélium 12 aux réservoirs d'ergols 10 et 11, pour assurer une pression suffisante à l'expulsion des ergols dans les tubulures 14 et au mélange carburant-comburant en entrée du propulseur 13.

De préférence, le système de propulsion comprend également des moyens de protection thermique et composants de contrôle thermique ( non représentés)tels que chaufferettes et protections isolatrices multi-couches afin d'assurer les conditions de température nécessaires au bon fonctionnement du système de propulsion.

Les réservoirs d'ergols 10, 11 peuvent avoir des formes diverses telles que sphériques, cylindrico-sphériques (figure 3), ellipsoidales, etc, qui peuvent être placées à l'intérieur ou à l'extérieur de l'adaptateur 2 d'interface. Afin d'optimiser l'encombrement du dispositif de propulsion 1, les (au moins) deux réservoirs d'ergols sont avantageusement de forme torique, l'un 10' au moins étant placé à l'intérieur de l'adaptateur 2 d'interface, et l'un 11' au moins à l'extérieur de l'adaptateur 2 d'interface (figure 4). Cette configuration permet également de libérer de la place à l'intérieur de l'adaptateur 2 pour y loger avantageusement le (au moins un) réservoir 12 de pressurisation, et les tubulures 15, 14 ainsi que le propulseur 13.

De façon à faciliter le puisage des ergols, on peut également avantageusement incliner légèrement, typiquement de quelques degrés, les réservoirs toriques 10' et 11' l'un par rapport à l'autre et chacun d'eux par rapport à un plan P perpendiculaire à l'axe AA de l'adaptateur 2 (figure 5). Les inclinaisons, i1 et i2, respectivement de chacun des deux réservoirs 10' et 11' toriques sont avantageusement, pour des raisons d'équilibre mécanique, en opposition de phase ; c'est-à-dire un des réservoirs de chaque paire de deux réservoirs tels que 10' et 11' ayant une inclinaison positive par rapport au plan P perpendiculaire à l'axe AA de l'adaptateur 2 et l'autre ayant une inclinaison négative par rapport à ce même plan.

Les deux ergols, comburant et carburant, ayant généralement des points de fusion de température différente, il est préférable de placer le réservoir torique 10' de l'ergol ayant le point de fusion le plus élevé à l'intérieur de l'adaptateur 2 car il sera mieux protégé thermiquement du vide sidéral et économisera donc l'énergie nécessaire au système de réchauffage.

## Revendications

1. Procédé de mise en orbite opérationnelle d'un satellite (3), équipé d'un système propre de propulsion, à partir d'une orbite de transfert (7) obtenue au moyen d'un lanceur spatial (6) comprenant au moins les étapes suivantes :
a) un dispositif de propulsion (1) commandé par le satellite (3) est attaché de manière séparable au satellite (3), et l'ensemble constitué du satellite (3) et du dispositif de propulsion (1) est monté sur le lanceur (6) avant l'injection par le lanceur (6) de l'ensemble sur l'orbite de transfert (7),
b) ledit ensemble (1-3) est amené, au moyen du dispositif de propulsion (1), depuis l'orbite de transfert (7) sur une orbite intermédiaire (8) entre l'orbite de transfert (7) et l'orbite opérationnelle (9), l'orbite intermédiaire (8) étant voisine de l'orbite opérationnelle (9) mais suffisamment éloignée de cette dernière pour éviter d'éventuelles interférences avec l'orbite opérationnelle (9),
c) le satellite (3) est séparé du dispositif de propulsion (1), qui reste sur l'orbite intermédiaire (8), et
d) le satellite (3) rejoint, au moyen de son système propre de propulsion, l'orbite opérationnelle (9) à partir de l'orbite intermédiaire (8).

2. Procédé selon la revendication 1, **caractérisé en ce que** le passage de l'orbite intermédiaire (8) à l'orbite opérationnelle (9) est réalisé au moyen d'une ou plusieurs impulsions successives, délivrées par le système propre de propulsion du satellite (3).

3. Procédé selon l'une quelconque des revendications 1 et 2, **caractérisé en ce qu'**il comprend de plus une étape de passivation du dispositif de propulsion (1) en orbite intermédiaire (8), avant ou après sa séparation du satellite (3).

4. Procédé selon l'une quelconque des revendications 1 à 3, **caractérisé en ce que** l'orbite opérationnelle (9) est une orbite géostationnaire, et l'orbite intermédiaire (8) est une orbite dite cimetière, à une altitude éloignée de quelques dizaines à quelques centaines de kilomètres de l'orbite géostationnaire (9).

5. Procédé selon l'une quelconque des revendications 1 à 3, **caractérisé en ce que** l'orbite opérationnelle (9) est une orbite dite MEO, autour de 20 000 km d'altitude, et l'orbite intermédiaire (8) est une orbite dite cimetière, à une altitude éloignée de quelques dizaines à quelques centaines de kilomètres de l'orbite MEO (9).

6. Dispositif de propulsion, pour la mise en oeuvre du procédé selon l'une quelconque des revendications 1 à 5, le dispositif pouvant être commandé par le satellite (3) et comprenant un adaptateur (2) d'interface lanceur (6)-satellite (3), auquel sont associées :
- au moins deux réservoirs, (10, 11 ; 10', 11') dont au moins un contient un ergol carburant et au moins un autre un ergol comburant,
- au moins un réservoir (12) de pressurisation d'au moins un ergol,
- au moins un propulseur (13) d'apogée,
- des tubulures (14) d'alimentation dudit propulseur (13) d'apogée en ergols des réservoirs (10, 11 ; 10', 11'), et, de préférence,
- des moyens de protection thermiques et composants de contrôle thermique,
**caractérisé en ce qu'**au moins deux des réservoirs (10', 11') d'ergol sont des réservoirs toriques, dont l'un (10') au moins est intérieur et au moins un autre (11') est extérieur à l'adaptateur (2).

7. Dispositif selon la revendication 6, **caractérisé en ce que** les réservoirs toriques (10', 11') sont inclinés l'un par rapport à l'autre et chacun d'eux par rapport à un plan (P) perpendiculaire à l'axe (AA) de l'adaptateur (2).

8. Dispositif selon la revendication 7, **caractérisé en ce que** deux réservoirs (10', 11') toriques sont inclinés l'un par rapport à l'autre en opposition de phase.

9. Dispositif selon l'une quelconque des revendications 6 à 8, **caractérisé en ce que** ledit au moins un réservoir torique intérieur (10') à l'adaptateur (2) est destiné à contenir celui des ergols carburant et comburant ayant le point de fusion le plus élevé.

10. Dispositif selon l'une quelconque des revendications 6 à 9, **caractérisé en ce que** l'adaptateur (2) d'interface est de forme tronconique standard, dont les grande (5) et petite (4) bases sont destinées à être attachées de manière séparable respectivement au lanceur (6) et au satellite (3).

## Claims

1. Method of launching into operational orbit a satellite (3), equipped with its own propulsion system, from a transfer orbit (7) obtained by means of a space launcher (6), comprising at least the following stages:
a) a propulsion device (1) controlled by the satellite (3) is separably attached to the satellite (3), and the assembly formed by the satellite (3) and the propulsion device (1) is mounted on the launcher (6) before injection of the assembly into the transfer orbit (7) by the launcher (6),
b) said assembly (1-3) is conveyed, by means of the propulsion device (1), from the transfer orbit (7) into an intermediate orbit (8) between the transfer orbit (7) and the operational orbit (9), the intermediate orbit (8) being close to the operational orbit (9) but sufficiently far away from it to avoid any interference with the operational orbit (9),
c) the satellite (3) is separated from the propulsion device (1), which remains in the intermediate orbit (8), and
d) the satellite (3) reaches the operational orbit (9) from the intermediate orbit (8) by means of its own propulsion system.

2. Method according to claim 1, **characterised in that** the transition from the intermediate orbit (8) to the operational orbit (9) is made by means of one or more successive thrusts, delivered by the satellite's (3) own propulsion system.

3. Method according to any one of claims 1 and 2, **characterised in that** it also comprises a stage of rendering the propulsion device (1) passive in the intermediate orbit (8), before or after its separation from the satellite (3).

4. Method according to any one of claims 1 to 3, **characterised in that** the operational orbit (9) is a geostationary orbit, and the intermediate orbit (8) is a so-called graveyard orbit, at an altitude several tens to several hundreds of kilometres away from the geostationary orbit (9).

5. Method according to any one of claims 1 to 3, **characterised in that** the operational orbit (9) is an orbit known as a MEO, at an altitude of around 20,000 km, and the intermediate orbit (8) is a so-called graveyard orbit, at an altitude several tens to several hundreds of kilometres away from the MEO (9).

6. Propulsion device, for the implementation of the method according to any one of claims 1 to 5, the device being able to be controlled by the satellite (3) and comprising a launcher (6)-satellite (3) interface adapter (2), with which are associated:
- at least two tanks (10, 11; 10', 11') at least one of which contains a fuel propellant and at least one other of which contains an oxidizer propellant,
- at least one pressurisation tank (12) for at least one propellant,
- at least one apogee thruster (13),
- manifolds (14) to supply said apogee thruster (13) with propellants from the tanks (10, 11; 10', 11') and, preferably,
- means of thermal protection and thermal control components,
**characterised in that** at least two of the tanks (10', 11') of propellant are toroidal tanks, at least one of which (10') is inside and at least one other of which (11') is outside the adapter (2).

7. Device according to claim 6, **characterised in that** the toroidal tanks (10', 11') are slanted relative to each other and relative to a plane (P) perpendicular to the axis (AA) of the adapter (2).

8. Device according to claim 7, **characterised in that** two toroidal tanks (10', 11') are slanted relative to each other in opposite phase.

9. Device according to any one of claims 6 to 8, **characterised in that** said at least one toroidal tank (10') inside the adapter (2) is intended to contain whichever of the fuel and oxidizer propellants has the highest melting point.

10. Device according to any one of claims 6 to 9, **characterised in that** the interface adapter (2) is of a standard conical shape, the large (5) and small (4) bases of which are intended to be separably attached to the launcher (6) and the satellite (3) respectively.

## Patentansprüche

1. Verfahren zur Platzierung eines Satelliten (3) in einen operationellen Orbit von einem Transferorbit (7) aus, der vermittels einer Raumstartvorrichtung (6) erhalten wird, wobei der Satellit mit einem eigenen Antriebssystem ausgestattet ist, wobei das Verfahren wenigstens die folgenden Schritte umfasst:
a) eine Antriebsvorrichtung (1), die von dem Satelliten (3) geregelt/gesteuert wird, wird trennbar an dem Satelliten (3) befestigt, und die aus dem Satelliten (3) und der Antriebsvorrichtung (1) zusammengesetzte Anordnung wird vor der Einführung der Anordnung in den Transferorbit (7) durch die Startvorrichtung (6) auf der Startvorrichtung (6) angebracht,
b) die Anordnung (1-3) wird vermittels der Antriebsvorrichtung (1) von dem Transferorbit (7) aus in einen Zwischenorbit (8) zwischen dem Transferorbit (7) und dem operationellen Orbit (9) gebracht, wobei der Zwischenorbit (8) dem operationellen Orbit (9) benachbart ist, aber hinreichend entfernt von letzterem ist, um etwaige Interferenzen mit dem operationellen Orbit (9) zu vermeiden,
c) der Satellit (3) wird von der Antriebsvorrichtung (1) getrennt, die in dem Zwischenorbit (8) verbleibt, und
d) der Satellit (3) tritt von dem Zwischenorbit (8) aus vermittels seines eigenen Antriebssystems dem operationellen Orbit (9) bei.

2. Verfahren nach Anspruch 1,
**dadurch gekennzeichnet, dass** der Übergang von dem Zwischenorbit (8) zu dem operationellen Orbit (9) vermittels eines oder mehrerer aufeinander folgender Schübe realisiert wird, die von dem eigenen Antriebssystem des Satelliten (3) ausgeführt werden.

3. Verfahren nach einem der Ansprüche 1 und 2,
**dadurch gekennzeichnet, dass** es ferner einen Schritt zur Deaktivierung der Antriebsvorrichtung (1) im Zwischenorbit (8) umfasst, vor oder nach ihrer Trennung von dem Satelliten (3).

4. Verfahren nach einem der Ansprüche 1 bis 3,
**dadurch gekennzeichnet, dass** der operationelle Orbit (9) ein geostationärer Orbit ist und der Zwischenorbit (8) ein sogenannter Friedhofsorbit ist, auf einer Höhe einige 10 bis einige 100 Kilometer entfernt von dem geostationären Orbit (9).

5. Verfahren nach einem der Ansprüche 1 bis 3,
**dadurch gekennzeichnet, dass** der operationelle Orbit (9) ein MEO genannter Orbit ist, auf einer Höhe von etwa 20000 km, und dass der Zwischenorbit (8) ein sogenannter Friedhofsorbit ist, auf einer Höhe einige 10 bis einige 100 Kilometer von dem MEO-Orbit (9) entfernt.

6. Antriebsvorrichtung zur Durchführung des Verfahrens nach einem der Ansprüche 1 bis 5, wobei die Vorrichtung dazu geeignet ist, von dem Satelliten (3) geregelt/ gesteuert zu werden, und einen Startvorrichtung (6)-Satellit (3)- Schnittstellenadapter (2) umfasst, dem zugeordnet sind:
- wenigstens zwei Behälter (10, 11; 10', 11'), von denen wenigstens einer einen Treibstoff auf Kohlenstoffbasis enthält und wenigstens ein anderer einen Oxidationsmittel-Treibstoff enthält,
- wenigstens ein Druckbehälter (12) für wenigstens einen Treibstoff,
- wenigstens ein Apogäumstriebwerk (13),
- Leitungen (14) zur Versorgung des Apogäumstriebwerks (13) mit Treibstoff aus den Behältern (10, 11; 10', 11'), und, vorzugsweise,
- Thermoschutzmittel und Thermoregelungs-/ steuerungselemente,
**dadurch gekennzeichnet, dass** wenigstens zwei der Treibstoffbehälter (10', 11') torusartige Behälter sind, von denen sich wenigstens einer (10') innerhalb und sich wenigstens ein anderer (11') außerhalb des Adapters (2) befindet.

7. Vorrichtung nach Anspruch 6,
**dadurch gekennzeichnet, dass** die torusartigen Behälter (10', 11') relativ zueinander geneigt sind und dass jeder von beiden in Bezug auf eine Ebene (P) geneigt ist, die senkrecht zu der Achse (AA) des Adapters (2) ist.

8. Vorrichtung nach Anspruch 7,
**dadurch gekennzeichnet, dass** zwei torusartige Behälter (10', 11') relativ zueinander mit entgegengesetzter Phase geneigt sind.

9. Vorrichtung nach einem der Ansprüche 6 bis 8,
**dadurch gekennzeichnet, dass** der wenigstens eine torusartige, innerhalb des Adapters (2) angeordnete Behälter (10') dazu bestimmt ist, denjenigen der Brennstoff- und Oxidationsmittel-Treibstoffe zu enthalten, der den höchsten Schmelzpunkt aufweist.

10. Vorrichtung nach einem der Ansprüche 6 bis 9,
**dadurch gekennzeichnet, dass** der Schnittstellenadapter (2) eine Standardkegelstumpfform aufweist, wobei die große (5) und die kleine (4) Grundfläche dazu bestimmt sind, trennbar mit der Startvorrichtung (6) beziehungsweise mit dem Satelliten (3) verbunden zu sein.
